# EUROPEAN PATENT APPLICATION

(11) **EP 4 757 483 A1**
(43) Date of publication of application: **10.06.2026**
(21) Application number: 24848012.1
(22) Date of filing: 16.07.2024
(51) Int. Cl.: H04W 74/08

(54) **RANDOM ACCESS METHOD AND APPARATUS AND STORAGE MEDIUM**

(30) Priority: 28.07.2023 CN 202310941837
(71) Applicant: Datang Mobile Communications Equipment Co., Ltd., Beijing 100085 (CN)
(72) Inventor: SHEN, Shuling, Beijing 100085 (CN); XING, Yanping, Beijing 100085 (CN); GAO, Xuejuan, Beijing 100085 (CN)
(74) Representative: Studio Torta S.p.A.
(86) International application number: PCT/CN2024/105641
(87) International publication number: WO 2025/026053

(57) **Abstract**

The present disclosure provides a random access method and apparatus and a storage medium. The random access method is applied to a terminal, and comprises: determining a target numerical value on the basis of a preset condition, or receiving a target numerical value sent by a network device, the target numerical value being used for determining the number of association pattern periods comprised in the time domain period length of one set of RO groups, and the one set of RO groups comprising one or more RO groups; and performing random access on the RO groups comprised in the time domain period length.

## Description

### CROSS-REFERENCE TO RELATED APPLICATIONS

The application claims the priority of Chinese patent application No. 202310941837.5, filed on July 28, 2023, titled "Random Access Method, Apparatus and Storage Medium", the entire content of which is incorporated herein by reference.

### TECHNICAL FIELD

The disclosure relates to a field of communication technologies, in particular to random access methods, related apparatuses and a related storage medium.

### BACKGROUND

Multiple physical random access channel (PRACH) transmissions may be performed consecutively in one random access (RA) attempt. The multiple PRACH transmissions in the RA attempt may only be performed within a single RA channel occasion (RO) group. The number of valid ROs within a single RO group equals the number of transmission times of the multiple PRACH transmissions configured by a network.

However, when the multiple PRACH transmissions are performed repeatedly, a division of RO groups corresponding to the repeated multiple PRACH transmissions cannot be determined in related arts, which means that the related arts cannot determine a starting position for each multi-PRACH transmission. Therefore, it fails to ensure smooth multi-PRACH transmission, resulting in a reduced RA success rate.

### SUMMARY

Embodiments of the disclosure provide random access (RA) methods, related apparatuses and a related storage medium, to solve the technical problem of low RA success rate in related arts.

In a first aspect, embodiments of the disclosure provide an RA method. The method is performed by a terminal, and includes:
determining a target value based on a preset condition, or receiving a target value sent by a network device, in which the target value is used for determining a number of association pattern periods within a time period of a group of RO groups, and the group of RO groups includes one or more RO groups; and
performing an RA process on an RO group within the time period.

In some embodiments, the preset condition includes that the target value is a minimum number of association pattern periods required for ensuring that each synchronization signal block (SSB) is associated with at least one RO group within one or more association pattern periods.

In some embodiments, the preset condition includes that the target value is a minimum number of association pattern periods required for ensuring that a number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a non-negative integer and includes any one of:
a value configured by the network device; or
a preset fixed value.

In some embodiments, the method further includes:
determining the threshold based on a product of a number of valid ROs within one association pattern period and a preset coefficient or based on a product of a number of valid ROs within one RO group and a preset coefficient, in which the threshold is a positive integer.

In some embodiments, the method further includes:
performing a ceiling process or a flooring process on the product of the number of valid ROs within one association pattern period and the preset coefficient or on the product of the number of valid ROs within one RO group and the preset coefficient.

In some embodiments, the number of valid ROs within one RO group is a maximum number of transmission times of allowed multiple PRACH transmissions on a current RACH resource.

In some embodiments, receiving the target value sent by the network device includes:
receiving respective target values corresponding to different numbers of transmission times of the multiple PRACH transmissions sent by the network device via a radio resource control (RRC) signaling; and
determining the target value corresponding to a current number of transmission times of the multiple PRACH transmissions.

In some embodiments, receiving the target value sent by the network device includes:
receiving one target value corresponding to each number of transmission times of the multiple PRACH transmissions sent by the network device via an RRC signaling.

In some embodiments, the method further includes:
determining a maximum number of association pattern periods within in an upper limit of the time period; and
determining a smaller value between the target value and the maximum number of the association pattern periods as the number of association pattern periods within the time period.

In some embodiments, the upper limit of the time period includes one or more of:
a definite value; or
an integer multiple of an association pattern period.

In a second aspect, embodiments of the disclosure provide an RA method. The method is performed by a network device, and includes:
determining a target value based on a preset condition, or sending a target value to a terminal, in which the target value is used for determining a number of association pattern periods within a time period of a group of RO groups, and the group of RO groups includes one or more RO groups; and
performing an RA process on an RO group within the time period.

In some embodiments, sending the target value to the terminal includes:
sending respective target values corresponding to different numbers of transmission times of multiple PRACH transmissions to the terminal via an RRC signaling, in which a respective target value corresponding to each number of transmission times of the multiple PRACH transmissions is a positive integer.

In some embodiments, the respective target value corresponding to each number of transmission times of the multiple PRACH transmissions is greater than or equal to 1 and less than or equal to the corresponding number of the multiple PRACH transmissions.

In some embodiments, sending the target value to the terminal includes:
sending one target value corresponding to each number of transmission times of the multiple PRACH transmissions to the terminal via an RRC signaling, in which the target value corresponding to each number of transmission times of the multiple PRACH transmissions is a positive integer.

In some embodiments, the target value corresponding to each number of transmission times of the multiple PRACH transmissions is greater than or equal to 1 and less than or equal to a maximum number of transmission times of the multiple PRACH transmissions configured for a current serving cell.

In some embodiments, the preset condition includes that the target value is a minimum number of association pattern periods required for ensuring that each SSB is associated with at least one RO group within one or more association pattern periods.

In some embodiments, the preset condition includes that the target value is a minimum number of association pattern periods required for ensuring that a number of remaining ROs other than ROS of at least one RO group associated with each SSB within one or more association pattern periods is less than or equal to a threshold, and the remaining ROs are valid ROs associated with the SSB but do not belong to any RO group.

In some embodiments, the threshold is a preset fixed value, and the preset fixed value is a non-negative integer.

In some embodiments, the method further includes:
determining the threshold based on a product of a number of valid ROs within one association pattern period and a preset coefficient or based on a product of a number of valid ROs within one RO group and a preset coefficient, in which the threshold is a positive integer.

In some embodiments, the method further includes:
performing a ceiling process or a flooring process on the product of the number of valid ROs within one association pattern period and the preset coefficient or on the product of the number of valid ROs within one RO group and the preset coefficient.

In some embodiments, the number of valid ROs within one RO group is a maximum number of transmission times of allowed multiple PRACH transmissions on a current RACH resource.

In some embodiments, the method further includes:
determining a maximum number of association pattern periods within an upper limit of the time period; and
determining a smaller value between the target value and the maximum number of association pattern periods as the number of association pattern periods within the time period.

In some embodiments, the upper limit of the time period includes one or more of:
a definite value; or
an integer multiple of an association pattern period.

In a third aspect, embodiments of the disclosure provide a terminal. The terminal includes: a memory, a transceiver and a processor.

The memory is configured to store a computer program. The transceiver is configured to send and receive data under the control of the processor. The processor is configured to read the computer program from the memory and perform following operations:
determining a target value based on a preset condition, or receiving a target value sent by a network device, in which the target value is used for determining a number of association pattern periods within a time period of a group of RO groups, and the group of RO groups includes one or more RO groups; and
performing an RA process on an RO group within the time period.

In some embodiments, the preset condition includes that the target value is a minimum number of association pattern periods required for ensuring that each SSB is associated with at least one RO group within one or more association pattern periods.

In some embodiments, the preset condition includes that the target value is a minimum number of association pattern periods required for ensuring that a number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a non-negative integer and includes any one of:
a value configured by the network device; or
a preset fixed value.

In some embodiments, the processor is configured to read the computer program from the memory and perform a following operation:
determining the threshold based on a product of a number of valid ROs within one association pattern period and a preset coefficient or based on a product of a number of valid ROs within one RO group and a preset coefficient, in which the threshold is a positive integer.

In some embodiments, the processor is configured to read the computer program from the memory and perform a following operation:
performing a ceiling process or a flooring process on the product of the number of valid ROs within one association pattern period and the preset coefficient or on the product of the number of valid ROs within one RO group and the preset coefficient.

In some embodiments, the number of valid ROs within one RO group is a maximum number of transmission times of allowed multiple PRACH transmissions on a current RACH resource.

In some embodiments, receiving the target value sent by the network device includes:
receiving respective target values corresponding to different numbers of transmission times of the multiple PRACH transmissions sent by the network device via an RRC signaling; and
determining the target value corresponding to a current number of transmission times of the multiple PRACH transmissions.

In some embodiments, receiving the target value sent by the network device includes:
receiving one target value corresponding to each number of transmission times of the multiple PRACH transmissions sent by the network device via an RRC signaling.

In some embodiments, the processor is configured to read the computer program from the memory and perform following operations:
determining a maximum number of association pattern periods within an upper limit of the time period; and
determining a smaller value between the target value and the maximum number of association pattern periods as the number of association pattern periods within the time period.

In some embodiments, the upper limit of the time period includes one or more of:
a definite value; or
an integer multiple of an association pattern period.

In a fourth aspect, embodiments of the disclosure provide a network device. The network device includes: a memory, a transceiver and a processor.

The memory is configured to store a computer program. The transceiver is configured to send and receive data under the control of the processor. The processor is configured to read the computer program from the memory and perform following operations:
determining a target value based on a preset condition, or sending a target value to a terminal, in which the target value is used for determining a number of association pattern periods within a time period of a group of RO groups, and the group of RO groups includes one or more RO groups; and
performing an RA process on an RO group within the time period.

In some embodiments, sending the target value to the terminal includes:
sending respective target values corresponding to different numbers of transmission times of multiple PRACH transmission to the terminal via an RRC signaling, in which a respective target value corresponding to each number of transmission times of the multiple PRACH transmissions is a positive integer.

In some embodiments, the respective target value corresponding to each number of transmission times of the multiple PRACH transmissions is greater than or equal to 1 and less than or equal to the corresponding number of transmission times of the multiple PRACH transmissions.

In some embodiments, sending the target value to the terminal includes:
sending one target value corresponding to each number of transmission times of the multiple PRACH transmissions to the terminal via an RRC signaling, in which the target value corresponding to each number of transmission times of the multiple PRACH transmissions is a positive integer.

In some embodiments, the target value corresponding to each number of transmission times of the multiple PRACH transmissions is greater than or equal to 1 and less than or equal to a maximum number of transmission times of the multiple PRACH transmissions configured for a current serving cell.

In some embodiments, the preset condition includes that the target value is a minimum number of association pattern periods required for ensuring that each SSB is associated with at least one RO group within one or more association pattern periods.

In some embodiments, the preset condition includes that the target value is a minimum number of association pattern periods required for ensuring that a number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a preset fixed value, and the preset fixed value is a non-negative integer.

In some embodiments, the processor is configured to read the computer program from the memory and perform a following operation:
determining the threshold based on a product of a number of valid ROs within one association pattern period and a preset coefficient or based on a product of a number of valid ROs within one RO group and a preset coefficient, in which the threshold is a positive integer.

In some embodiments, the processor is configured to read the computer program from the memory and perform a following operation:
performing a ceiling process or a flooring process on the product of the number of valid ROs within one association pattern period and the preset coefficient or on the product of the number of valid ROs within one RO group and the preset coefficient.

In some embodiments, the number of valid ROs within one RO group is a maximum number of transmission times of allowed multiple PRACH transmissions on a current RACH resource.

In some embodiments, the processor is configured to read the computer program from the memory and perform following operations:
determining a maximum number of association pattern periods within an upper limit of the time period; and
determining a smaller value between the target value and the maximum number of association pattern periods as the number of association pattern periods within the time period.

In some embodiments, the upper limit of the time period includes one or more of:
a definite value; or
an integer multiple of an association pattern period.

In a fifth aspect, embodiments of the disclosure provide an RA apparatus. The RA apparatus includes:
a first determining module, configured to determine a target value based on a preset condition, or receive a target value sent by a network device, in which the target value is used for determining a number of association pattern periods within a time period of a group of RO groups, and the group of RO groups includes one or more RO groups; and
a first RA module, configured to perform an RA process on an RO group within the time period.

In some embodiments, the preset condition includes that the target value is a minimum number of association pattern periods required for ensuring that each SSB is associated with at least one RO group within one or more association pattern periods.

In some embodiments, the preset condition includes that the target value is a minimum number of association pattern periods required for ensuring that a number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a non-negative integer and includes any one of:
a value configured by the network device; or
a preset fixed value.

In some embodiments, the apparatus further includes:
a third determining module, configured to determine the threshold based on a product of a number of valid ROs within one association pattern period and a preset coefficient or based on a product of a number of valid ROs within one RO group and a preset coefficient, in which the threshold is a positive integer.

In some embodiments, the apparatus further includes:
a first rounding module, configured to perform a ceiling process or a flooring process on the product of the number of valid ROs within one association pattern period and the preset coefficient or on the product of the number of valid ROs within one RO group and the preset coefficient.

In some embodiments, the number of valid ROs within the RO group is a maximum number of transmission times of allowed multiple PRACH transmissions on a current RACH resource.

In some embodiments, the first determining module includes:
a first receiving unit, configured to receive respective target values corresponding to different numbers of transmission times of the multiple PRACH transmissions sent by the network device via an RRC signaling, and
a first determining unit, configured to determine the target value corresponding to a current number of transmission times of the multiple PRACH transmissions.

In some embodiments, the first determining module further includes:
a second receiving unit, configured to receive one target value corresponding to each number of transmission times of the multiple PRACH transmissions sent by the network device via an RRC signaling.

In some embodiments, the apparatus further includes:
a fourth determining module, configured to determine a maximum number of association pattern periods within an upper limit of the time period; and
a fifth determining module, configured to determine a smaller value between the target value and the maximum number of association pattern periods as the number of association pattern periods within the time period.

In some embodiments, the upper limit of the time period includes one or more of:
a definite value; or
an integer multiple of an association pattern period.

In a sixth aspect, embodiments of the disclosure provide an RA device. The RA device includes:
a second determining module, configured to determine a target value based on a preset condition, or send a target value to a terminal, in which the target value is used for determining a number of association pattern periods within a time period of a group of RO groups, and the group of RO groups includes one or more RO groups; and
a second RA module, configured to perform an RA process on an RO group within the time period.

In some embodiments, the second determining module includes:
a first sending unit, configured to send respective target values corresponding to different numbers of transmission times of the multiple PRACH transmissions to the terminal via an RRC signaling, in which a respective target value corresponding to each number of transmission times of the multiple PRACH transmissions is a positive integer.

In some embodiments, the respective target value corresponding to each number of transmission times of the multiple PRACH transmissions is greater than or equal to 1 and less than or equal to the corresponding number of transmission times of the multiple PRACH transmissions.

In some embodiments, the second determining module includes:
a second sending unit, configured to send one target value corresponding to each number of transmission times of the multiple PRACH transmissions to the terminal via an RRC signaling, in which the target value corresponding to each number of transmission times of the multiple PRACH transmissions is a positive integer.

In some embodiments, the target value corresponding to each number of transmission times of the multiple PRACH transmissions is greater than or equal to 1 and less than or equal to a maximum number of transmission times of the multiple PRACH transmissions configured for a current serving cell.

In some embodiments, the preset condition includes that the target value is a minimum number of association pattern periods required for ensuring that each SSB is associated with at least one RO group within one or more association pattern periods.

In some embodiments, the preset condition includes that the target value is a minimum number of association pattern periods required for ensuring that a number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a preset fixed value, and the preset fixed value is a non-negative integer.

In some embodiments, the device further includes:
a sixth determining module, configured to determine the threshold based on a product of a number of valid ROs within one association pattern period and a preset coefficient or based on a product of a number of valid ROs within one RO group and a preset coefficient, in which the threshold is a positive integer.

In some embodiments, the device further includes:
a second rounding module, configured to perform a ceiling process or a flooring process on the product of the number of valid ROs within one association pattern period and the preset coefficient or on the product of the number of valid ROs within one RO group and the preset coefficient.

In some embodiments, the number of valid ROs within one RO group is a maximum number of transmission times of allowed multiple PRACH transmissions on a current RACH resource.

In some embodiments, the device further includes:
a seventh determining module, configured to determine a maximum number of association pattern periods within an upper limit of the time period; and
an eighth determining module, configured to determine a smaller value between the target value and the maximum number of association pattern periods as the number of association pattern periods within the time period.

In some embodiments, the upper limit of the time period includes one or more of:
a definite value; or
an integer multiple of an association pattern period.

In a seventh aspect, embodiments of the disclosure provide a non-transitory readable storage medium. The non-transitory readable storage medium having a computer program stored thereon, and the computer program is used for causing a processor to implement the RA method according to the first aspect or the second aspect.

In an eighth aspect, embodiments of the disclosure provide a processor-readable storage medium. The processor-readable storage medium has a computer program stored thereon, and the computer program is used for causing a processor to implement the RA method according to the first aspect or the second aspect.

In a ninth aspect, embodiments of the disclosure provide a computer-readable storage medium. The computer-readable storage medium has a computer program stored thereon, and the computer program is used for causing a computer to implement the RA method according to the first aspect or the second aspect.

In a tenth aspect, embodiments of the disclosure provide a communication device. The communication device stores a computer program, and the computer program is used for causing the communication device to implement the RA method according to the first aspect or the second aspect.

In an eleventh aspect, embodiments of the disclosure provide a chip product. The chip product stores a computer program, and the computer program is used for causing the chip product to implement the RA method according to the first aspect or the second aspect.

With the RA methods, the related apparatuses and the related storage medium according to the embodiments of the disclosure, the terminal or the network device determines the target value based on the preset condition or configured by the network device and determines the number of association pattern periods within the time period of the group of RO groups for rapid periodic division of RO groups, such that the terminal and the network device may quickly determine the starting position for each multi-PRACH transmission, which ensures smooth multi-PRACH transmission and improves an RA success rate.

### BRIEF DESCRIPTION OF THE DRAWINGS

To clearly illustrate the technical solutions in embodiments of the disclosure or related arts, the drawings used in embodiments or related arts are briefly introduced below. Obviously, the following drawings are only some embodiments of the disclosure. For those skilled in the field, other drawings may be obtained based on these drawings without inventive work.
FIG. 1 is a flowchart illustrating an RA method according to an embodiment of the disclosure.
FIG. 2 is a schematic diagram illustrating a division of a time period in an example scenario according to an embodiment of the disclosure.
FIG. 3 is a schematic diagram illustrating a division of a time period in an example scenario according to an embodiment of the disclosure.
FIG. 4 is a schematic diagram illustrating a division of a time period in an example scenario according to an embodiment of the disclosure.
FIG. 5 is a schematic diagram illustrating a division of a time period in an example scenario according to an embodiment of the disclosure.
FIG. 6 is a flowchart illustrating another RA method according to an embodiment of the disclosure.
FIG. 7 is a schematic structural diagram illustrating a terminal according to an embodiment of the disclosure.
FIG. 8 is a schematic diagram illustrating a network device according to an embodiment of the disclosure.
FIG. 9 is a schematic structural diagram illustrating an RA apparatus according to an embodiment of the disclosure.
FIG. 10 is a schematic structural diagram illustrating an RA device according to an embodiment of the disclosure.

### DETAILED DESCRIPTION

An association pattern period includes one or more association periods, and an association pattern period allows synchronization signal block (SSB)-to-random access channel occasion (RO) mapping to repeat at most every 160 milliseconds. After N association periods (N is an integer number), if there is an RO that is not associated with an SSB index, the RO shall no longer be used for physical random access channel (PRACH) transmission.

Currently, 2, 4, or 8 repetitions of the PRACH transmission are supported, meaning that the PRACH transmission may be performed 2 times, 4 times, or 8 times consecutively within a single RA attempt. However, the multiple PRACH transmissions within a single RA attempt may only be performed within a single RO group. The number of valid ROs included within an RO group equals the number of transmission times of the multiple PRACH transmissions configured by a network. In a case where the network configures one number of transmission times for a cell, the number of valid ROs included in the RO group equals the number of transmission times. In a case where the network configures two or more numbers of transmission times for the multiple PRACH transmissions for a cell, for each number of transmission times, the number of valid ROs in the RO group equals the corresponding number of transmission times.

Starting from a system frame 0, a group of RO groups is repeatedly determined/configured within each time period (e.g., time period X). The time period consists of K SSB-to-RO association pattern periods, where K is a positive integer. SSB-to-RO mapping within each association pattern period is identical, exhibiting inherent periodic repetition. However, there is currently not provide a method for determining the value of K, and the terminal and the network device cannot rapidly determine the division of RO groups based on the time period, and thus smooth PRACH transmission cannot be ensured, thereby reducing an RA success rate.

In view of the above technical problems, the disclosure provides RA methods. According to the methods, the terminal and the network device only need to determine a group of RO groups within one time period, and subsequent division of RO groups may be achieved by repeating the first time period. A target value is determined based on a preset condition or is configured by the network device. The target value is used for determining the number of association pattern periods corresponding to the time period of the group of RO groups, such that the terminal and the network device may rapidly determine a starting position for each multi-PRACH transmission and perform an RA process on an RO group within the time period, which ensures smooth multi-PRACH transmission, thereby improving an RA success rate.

To make the objectives, technical solutions, and advantages of embodiments of the disclosure clearer, the technical solutions in embodiments of the disclosure are clearly and fully described with reference to the accompanying drawings. Obviously, the embodiments described below are only part of embodiments of the disclosure, not all of them. Based on the embodiments of the disclosure, other embodiments obtained by those skilled in the art without inventive works all fall into the scope of protection of the disclosure.

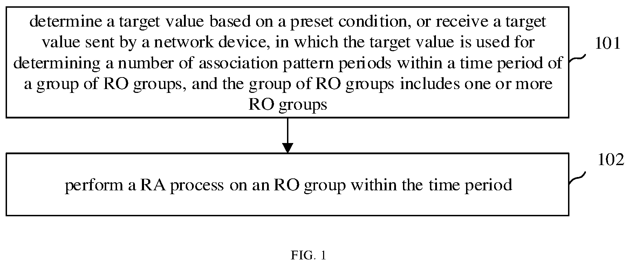

FIG. 1 is a flowchart illustrating an RA method according to an embodiment of the disclosure. As illustrated in FIG. 1, embodiments of the disclosure provide an RA method. An execution entity of the RA method illustrated in FIG. 1 may be a terminal or a user equipment (UE), such as a mobile phone. The method includes the following.

At step 101, a target value is determined based on a preset condition, or a target value sent by a network device is received, in which the target value is used for determining the number of association pattern periods within a time period of a group of RO groups, and the group of RO groups includes one or more RO groups.

In detail, the target value is used for determining the number of association pattern periods within a time period (e.g., time period X). Each time period includes a group of RO groups, and each group of RO groups includes one or more RO groups.

In embodiments of the disclosure, the terminal may determine the target value based on the preset condition, and the preset condition is a predefined rule. Similarly, the network device may also determine the target value based on the preset condition, and the determination process is similar to that on the terminal side.

For example, the terminal determines that the target value is a minimum number of association pattern periods required for ensuring that each SSB is associated with at least one RO group within one or more association pattern periods.

As another example, the terminal determines that the target value is a minimum number of association pattern periods required for ensuring that the number of remaining ROs rather than ROs of at least one RO group associated with each SSB within one or more association pattern periods is less than or equal to a preset/preconfigured threshold, and the remaining ROs are valid ROs associated with the SSB but do not belong to any RO group.

The terminal may also determine the target value through a configuration from the network side. That is, the network device may send the target value to the terminal, and the terminal receives the target value sent by the network device. The network device may send one or more target values. In a case where the network device sends multiple target values to the terminal, the terminal needs to select one target value from the multiple target values for the current multiple PRACH transmissions.

For example, in a case where the multiple PRACH transmissions corresponding to different numbers of transmission times of the multiple PRACH transmissions are performed on separate RACH resources, the network device sends respective target values corresponding to different numbers of transmission times of the multiple PRACH transmissions via a radio resource control (RRC) signaling. These target values are all positive integers. Then, the terminal receives these target values sent by the network device via the RRC signaling.

In a case where the multiple PRACH transmissions corresponding to different numbers of transmission times of the multiple PRACH transmissions are performed on shared RACH resources, the network device sends one target value corresponding to each number of transmission times of the multiple PRACH transmissions to the terminal via an RRC signaling. That is, one target value is shared for all numbers of transmission times of the multiple PRACH transmissions, and the target value is a positive integer. The terminal receives the target value corresponding to all numbers of transmission times of the multiple PRACH transmissions sent by the network device via the RRC signaling.

At step 102, an RA process is performed on an RO group within the time period.

In embodiments of the disclosure, after determining the target value, the terminal or the network device determines that a time period is the target number of association pattern periods, and performs the RA process or multiple PRACH transmissions on the RO group(s) within the time period.

For example, after determining the target value, which is represented by K, the terminal or the network device identifies that a time period is K association pattern periods and performs the RA process on the RO groups within the time period.

With the RA method according to embodiments of the disclosure, the target value is determined based on the preset condition or the target value is configured by the network device, and the number of association pattern periods contained in the time period of the group of RO groups is determined for rapid periodic division of RO groups, such that the terminal and the network device may quickly determine the starting position for each multi-PRACH transmission, which ensures smooth multi-PRACH transmission and improves an RA success rate.

In some embodiments, the preset condition includes that the target value is a minimum number of association pattern periods required for ensuring that each SSB is associated with at least one RO group within one or more association pattern periods.

In detail, the preset condition may be that the target value is the minimum number of association pattern periods required for ensuring that each SSB is associated with at least one RO group within one or more association pattern periods. In other words, at least the target number of association pattern periods are needed to ensure that each SSB is determined/configured with at least one RO group within these association pattern periods.

For example, within one association pattern period, the number of valid ROs associated with the same SSB index is 3, and the number of transmission times of the multiple PRACH transmissions is 4 (that is, one RO group contains 4 valid ROs). Therefore, at least two association pattern periods are needed to ensure that each SSB within the association pattern periods is associated with at least one RO group, where the target value is 2.

The RA method according to the above embodiment is further illustrated through a following specific example below.

### Example 1

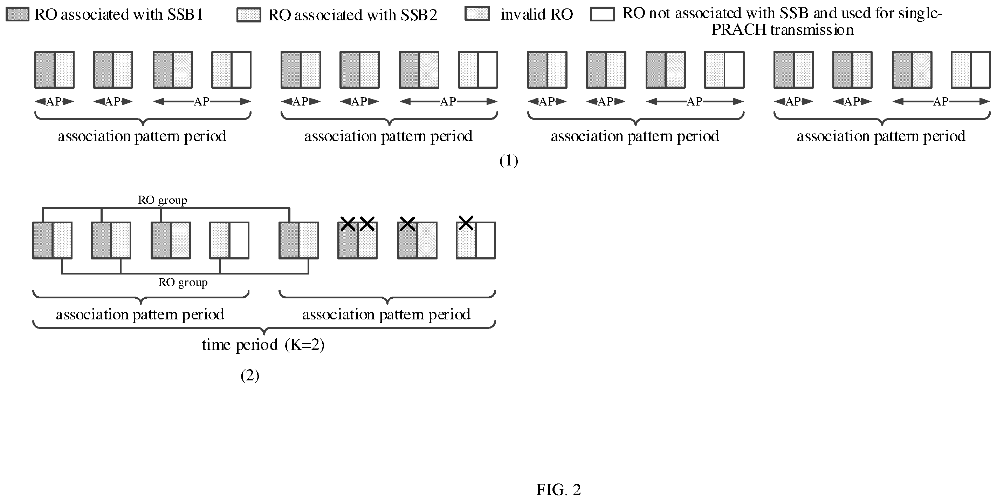

FIG. 2 is a schematic diagram illustrating a division of a time period in an example scenario according to an embodiment of the disclosure. As illustrated in FIG. 2, an association pattern period includes one or more association periods. FIG. 2 illustrates the association periods and the association pattern periods from system frame number (SFN) 0 to SFN 15. Each system frame contains two ROs. The network configures two candidate SSBs, namely SSB1 and SSB2. The first SFN contains two valid ROs that are associated with SSB1 and SSB2, respectively, and the two valid ROs form an association period (AP). Similarly, the second SFN forms an AP. The third SFB contains one invalid RO, and one valid RO needs to combine with the fourth SFN to form an AP to achieve sequential periodic mapping of SSB1 and SSB2. Therefore, the fourth SFN has one remaining RO and cannot be mapped to the two SSBs, and thus it is no longer used for SSB mapping. The above pattern of the first four frames is repeated for the following SFNs. Thus, the three APs of the first four frames collectively form an association pattern period.

The multiple PRACH transmissions use the same SSB-to-RO mapping pattern as the single PRACH transmission. In a case where the number of transmission times of the multiple PRACH transmissions is 4 or the multiple PRACH transmissions are four PRACH transmissions, each RO group contains four valid ROs. The UE may determine the number (i.e., K) of association pattern periods included in the time period in the following ways.

The terminal or the base station determines the number (i.e., K) of association pattern periods corresponding to the time period of the group of RO groups based on the preset condition. K represents the minimum number of association pattern periods required for determining/configuring at least one RO group for each SSB within one or more association pattern periods. As illustrated in FIG. 2(1), the number of valid ROs associated with the same SSB index within one association pattern period is 3. Since one RO group contains 4 valid ROs, at least 2 association pattern periods are required. Therefore, the minimum number of association pattern periods required for determining/configuring at least one RO group for each SSB within the association pattern periods is 2. As illustrated in FIG. 2(2), the first four ROs associated with the same SSB index within the two association pattern periods form an RO group corresponding to the SSB index. The last two valid ROs associated with each SSB in the second association pattern period, used for single PRACH transmission, cannot form an RO group, and thus become the remaining ROs for the multiple PRACH transmission.

At the same time when the number (i.e., K) of association pattern periods is determined, a group of RO groups included in the K association pattern periods may be determined, and the terminal may perform the multiple PRACH transmissions on the RO group associated with its selected SSB index.

With the RA method according to embodiments of the disclosure, the minimum number of association pattern periods required for associating each SSB with at least one RO group within one or more association pattern periods is determined as K. This ensures smooth multi-PRACH transmission on the RO groups included in the K association pattern periods, thereby improving a transmission efficiency and improving an RA success rate.

In some embodiments, the preset condition is that K is the minimum number of association pattern periods required for ensuring that the number of remaining ROs other than ROs of at least one RO group associated with each SSB within one or more association pattern periods is less than or equal to a threshold, and the remaining ROs are valid ROs associated with the SSB but do not belong to any RO group.

In detail, the remaining ROs are valid ROs within the association pattern period that is associated with the SSB and used for single-PRACH transmission, but do not belong to any RO group.

The preset condition may be that K is the minimum number of association pattern periods required for ensuring that the number of remaining ROs other than ROs of at least one RO associated with each SSB within one or more association pattern periods is less than or equal to a threshold. That is, at least the target number of association pattern periods are required to ensure that after the ROs of the at least one RO group are determined/configured for each SSB within these association pattern periods, the number of the remaining ROs is less than or equal to the threshold.

For example, if the threshold is 0, then no RO is left after determining/configuring at least one RO group for each SSB within the association pattern periods, i.e., there is no remaining RO. In other words, all the valid ROs, for the single-PRACH transmission, associated with the SSB index within the K association pattern periods are able to be reused for the multiple PRACH transmissions. If the threshold is 1, then at most 1 RO left after determining/configuring at least one RO group for each SSB within the association pattern periods, i.e., there is at most one remaining RO.

In the case where the threshold is 0, the preset condition may be that the target value is the minimum number of association pattern periods required for ensuring that the number of valid ROs associated with the same SSB index within one or more association pattern periods is an integer multiple of the number of valid ROs included within one RO group.

For example, in the case where the number of valid ROs associated with the same SSB index within one association pattern period is 3 and where the number of valid ROs included in one RO group is 4, at least 4 association pattern periods are required to ensure that the number of valid ROs associated with the same SSB index within the target number (i.e., K) of association pattern periods is an integer multiple of the number of valid ROs included within one RO group. That is, the minimum value of K is 4, and at least 4 (i.e., the value of K) × 3 is an integer multiple of 4 (i.e., the number of valid ROs within one RO group).

In the case where the threshold is 0, the preset condition may be that the target value equals a value obtained through dividing the least common multiple of the number of valid ROs associated with the same SSB index within one association pattern period and the number of transmission times of the multiple PRACH transmissions by the number of valid ROs associated with the same SSB index within one association pattern period.

For example, assuming that the number of valid ROs associated with the same SSB index within one association pattern period is 3 and that the number of transmission times of the multiple PRACH transmissions is 4, the least common multiple of 3 and 4 is 12. Since the number of valid ROs associated with the same SSB index within one association pattern period is 3, and thus the target value is obtained by dividing 12 by 3 to obtain 4, i.e., the target value equals 4.

With the RA method according to embodiments of the disclosure, the target value is determined by determining the minimum number of association pattern periods required for ensuring that the number of remaining ROs other than ROs of at least one RO group associated with each SSB within the one or more association pattern periods is less than or equal to the threshold. It ensures smooth multi-PRACH transmission on the RO group within K association pattern periods, thereby improving a transmission efficiency and improving an RA success rate.

In some embodiments, the threshold is a non-negative integer and includes any one of the following:
a value configured by the network device; or
a preset fixed value.

In detail, the threshold is a non-negative integer, and the threshold is configured by the network side, is a preset fixed value, or is a predefined fixed value.

For example, the network side configures the threshold t for the terminal, and the terminal determines the target value based on the threshold t and the preset condition.

As another example, the protocol predefines the threshold t, and the terminal performs a determination on the target value based on the predefined value.

In some embodiments, the method further includes:
determining the threshold based on a product of the number of valid ROs within one association pattern period and a preset coefficient or based on a product of the number of valid ROs within one RO group and a preset coefficient, in which the threshold is a positive integer.

In detail, the terminal or the network device determines that the threshold t is the product of the number of valid ROs within one association pattern period and the preset coefficient, or that the threshold t is the product of the number of valid ROs within one RO group and the preset coefficient.

The preset coefficient may be configured by the network side or predefined by a protocol.

For example, in a case where the number of valid ROs within one association pattern period is 3, and where the terminal determines that the preset coefficient is 0.5, which is configured by the network side or predefined by a protocol, a value obtained by multiplying the preset coefficient by 3 is 1.5, and thus the threshold t may be set to either 1 or 2.

As another example, in a case where the number of valid ROs within one RO group is 4, and where the terminal determines that the preset coefficient is 0.5, which is configured by the network side or predefined by a protocol, a value obtained by multiplying the preset coefficient by 4 is 2, and thus the threshold t is set to 2.

With the RA method according to embodiments of the disclosure, the threshold may be determined in many ways. For example, the threshold may be configured by the network side, predefined by a protocol, or a product of a medium value and a coefficient. The target value is determined by comparing the threshold with the number of remaining ROs, which ensures smooth multi-PRACH transmission, thereby improving an RA success rate.

In some embodiments, the method further includes:
performing a ceiling (or rounding up) process or a flooring (or rounding down) process on the product of the number of valid ROs within one association pattern period and the preset coefficient or on the product of the number of valid ROs within one RO group and the preset coefficient.

In detail, since the product of the number of valid ROs within one association pattern period and the preset coefficient or the product of the number of valid ROs within one RO group and the preset coefficient may not necessarily be an integer, it is necessary to perform the rounding up process or the rounding down process on the product to ensure that the threshold is a non-negative integer.

In some embodiments, the number of valid ROs within one RO group is the maximum number of transmission times of allowed multiple PRACH transmissions on a current RACH resource.

For example, in a case where both 2 PRACH transmissions and 4 PRACH transmissions are allowed to perform on the current RACH resource, the number of valid ROs within one RO group is 4. In a case where only 2 PRACH transmissions are allowed to perform on the current RACH resource, the maximum value (i.e., 2) may be taken as the number of valid ROs within one RO group.

The RA method according to the above embodiment is further illustrated through a following specific example below.

### Example 2

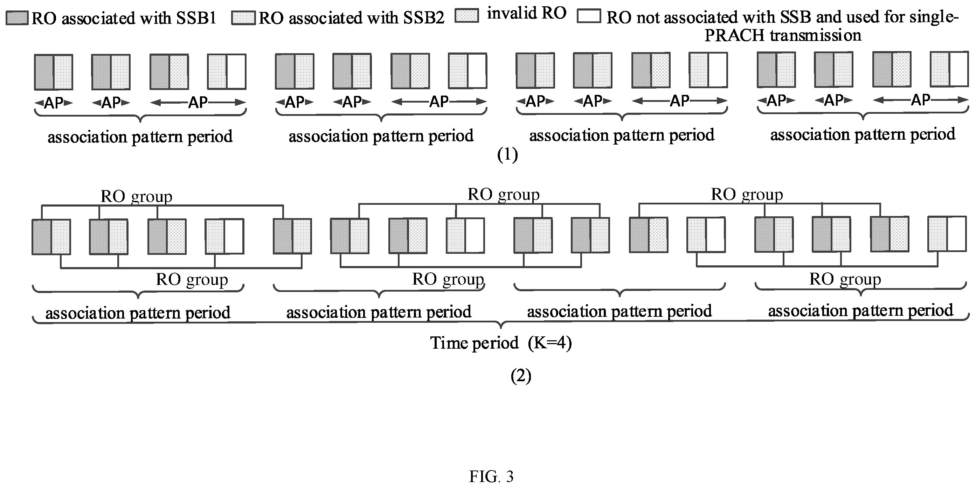

FIG. 3 is another schematic diagram illustrating a division of a time period in an example scenario according to an embodiment of the disclosure. As illustrated in FIG. 3, an association pattern period includes one or more association periods. FIG. 3 illustrates the association periods and the association pattern periods from SFN0 to SFN15. Each system frame contains two ROs. The network configures two candidate SSBs, namely SSB1 and SSB2. The first SFN contains two valid ROs that are associated with SSB1 and SSB2, respectively, and the two ROs form an association period. Similarly, the second SFN forms an AP. The third SFN contains one invalid RO, and one valid RO needs to combine with the fourth SFN to form an AP, to achieve sequential periodic mapping of SSB1 and SSB2. Therefore, the fourth SFN has one remaining RO and cannot be mapped to the two SSBs, and thus it is no longer used for SSB mapping. The above pattern of the first four frames is repeated for the following SFNs. Thus, the three APs of the first four frames collectively form an association pattern period.

The multiple PRACH transmissions use the same SSB-to-RO mapping pattern as single-PRACH transmission. In a case where the number of transmission times of the multiple PRACH transmissions is 4 or the multiple PRACH transmissions are four PRACH transmissions, each RO group contains four valid ROs. The UE may determine the number (i.e., K) of association pattern periods included in the time period in the following ways.

The terminal or the base station determines the number (i.e., the K) of association pattern periods corresponding to the time period of the group of RO groups based on the preset condition. K represents the minimum number of association pattern periods required for ensuring that the number of remaining ROs other than ROs of at least one RO group determined/configured for each SSB within one or more association pattern periods is equal to 0. In the example, the threshold for the number of remaining ROs is 0. The threshold may be predefined by a base station and the UE through a protocol, or configured by the base station via an RRC signaling, which is not limited here.

There is no remaining RO, which means that all the valid ROs, for the single-PRACH transmission, associated with the SSB index within K association pattern periods are able to be reused for the multiple PRACH transmissions. Therefore, the solution is equivalent to a situation where K is the minimum number of the association pattern periods within which the number of the valid ROs associated with the same SSB index is an integer multiple of the number of valid ROs included within one RO group, which is also equivalent to that K equals a value obtained through dividing the least common multiple of the number of valid ROs associated with the same SSB index within one association pattern period and the number of transmission times of the multiple PRACH transmissions by the number of valid ROs associated with the same SSB index within one association pattern period.

As illustrated in FIG. 3(1), the number of valid ROs associated with the same SSB index within one association pattern period is 3, and one RO group contains 4 valid ROs. Thus, K=LCM(3,4)/3=4, where LCM() represent a function for obtaining the least common multiple. As illustrated in FIG. 3(2), 12 valid ROs associated with the same SSB index within 4 APs sequentially form 3 RO groups, and it is ensured that there is no remaining ROs within the time period.

At the same time when the number (i.e., K) of association periods is determined, a group of RO groups within the K association pattern periods may be determined, and the terminal may perform the multiple PRACH transmissions on the RO group associated with its selected SSB index.

### Example 3

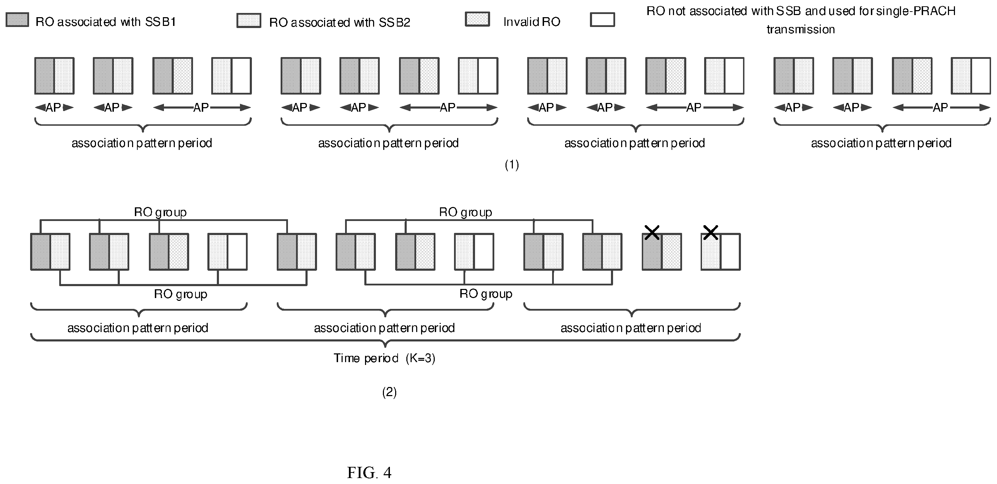

FIG. 4 is still another schematic diagram of a division of a time period in an example scenario according to an embodiment of the disclosure. As illustrated in FIG. 4, an association pattern period includes one or more association periods. FIG. 4 illustrates the association periods and the association pattern periods from SFN0 to SFN15. Each system frame contains two ROs. The network configures two candidate SSBs, namely SSB1 and SSB2. The first SFN contains two valid ROs that are associated with SSB1 and SSB2, respectively, and the two valid ROs form an association period. Similarly, the second SFN forms an AP. The third SFN contains one invalid RO, and one valid RO needs to combine with the fourth SFN to form an AP, to achieve the sequential periodic mapping of SSB1 and SSB2. Therefore, the fourth SFN has one remaining RO and cannot be mapped to the two SSBs, and thus it is no longer used for SSB mapping. The following SFNs repeat the pattern of the first four frames. Thus, the three APs of the first four frames collectively form an association pattern period.

The multiple PRACH transmissions use the same SSB-to-RO mapping pattern as the single-PRACH transmission. In a case where the number of transmission times of the multiple PRACH transmission is 4 or the multiple PRACH transmissions are 4 PRACH transmissions, each RO group contains four valid ROs. The UE may determine the number (i.e., the K) of the association pattern periods included in the time period in the following ways.

The terminal or the base station determines the number (i.e., the K) of association pattern periods corresponding to the time period of the group of RO groups based on a preset condition. K is the minimum number of association pattern periods required for ensuring that after determining/configuring at least one RO group for each SSB within the one or more association pattern periods, the number of remaining ROs is less than or equal to a threshold. In the example, the threshold being 1 requires the number of remaining ROs within the K association pattern periods to be less than or equal to 1. The threshold may be predefined by the base station and the UE through a protocol, configured by the base station via an RRC signaling, or obtained by performing the rounding down process on a value obtained by multiplying the number of valid ROs within one association pattern period by a coefficient of 0.5, which is not limited here. Taking the coefficient of 0.5 as an example, the coefficient may also be configured by the network side or predefined by a protocol.

As illustrated in FIG. 3(1), the number of valid ROs associated with the same SSB index within one association pattern period is 3. When K=1, the number of valid ROs associated with the same SSB index within one association pattern period cannot from an RO group, and thus it fails to meet the requirement. When K=2, the number of valid ROs associated with the same SSB index within two association pattern periods is 6, and after the first 4 valid ROs form one RO group, 2 valid ROs are left. The number of remaining ROs is greater than the threshold, and it also fails to meet the requirement. When K=3, as illustrated in FIG. 3(2), the number of valid ROs associated with the same SSB index within three association pattern periods is 9, the first 8 valid ROs sequentially form two RO groups, and 1 valid RO is left. The number of the remaining RO satisfies the requirement of the threshold. Therefore, the number of association pattern periods included in the time period determined when the threshold = 1 is 3.

At the same time when the K association pattern periods are determined, the terminal may determine a group of RO groups within the K association pattern periods, and performs the multiple PRACH transmissions on the RO group associated with its selected SSB index.

With the RA method according to the embodiment of the disclosure, the target value is determined by determining the minimum number of association pattern periods required for ensuring that the number of remaining ROs other than ROs of at least one RO group associated with each SSB within one or more association pattern periods is less than or equal to the threshold, which ensures smooth multi-PRACH transmission, thereby improving a transmission efficiency and improving an RA success rate.

In some embodiments, receiving the target value sent by the network device includes:
receiving respective target values corresponding to different numbers of transmission times of the multiple PRACH transmissions sent by the network device via an RRC signaling; and
determining the target value corresponding to a current number of transmission times of the multiple PRACH transmissions.

In detail, in a case where the multiple PRACH transmissions corresponding to different numbers of transmission times are performed on separated RACH resources, the network device sends respective target values corresponding to different numbers of transmission times of the multiple PRACH transmissions to the terminal via the RRC signaling. That is, the network device configures a respective target value for each number of transmission times of the multiple PRACH transmissions, and these respective target values are all positive integers.

After receiving the respective target values corresponding to different numbers of transmission times of the multiple PRACH transmissions sent via the RRC signaling, the terminal determines the final target value to be used based on the current number of transmission times of the multiple PRACH transmissions.

For example, the base station sends the respective target values corresponding to different numbers of transmission times of the multiple PRACH transmissions via the RRC signaling. For a case where the number of transmission times is 2 (i.e., 2 PRACH transmissions), the target value is K1. For a case where the number of transmission times is 4 (i.e., 4 PRACH transmissions), the target value is K2. For a case where the number of transmission times is 8 (i.e., 8 PRACH transmissions), the target value is K3. The terminal receives K1, K2 and K3 sent by the base station via the RRC signaling. By determining that the current number of transmission times of the multiple PRACH transmissions is 4, the final target value is K2, and the terminal determines that the time period is K2 association pattern periods, and performs the RA process on the RO group included in the time period.

In an example, the target value is greater than or equal to 1 and less than or equal to the number of transmission times of the multiple PRACH transmissions.

For example, the base station sends the respective target values corresponding to different numbers of transmission times of the multiple PRACH transmissions via the RRC signaling. For a case where the number of transmission times is 2 (i.e., 2 PRACH transmissions), the target value is K1, and K1 is set to 1 or 2. For a case where the number of transmission times is 4 (i.e., 4 PRACH transmissions), the target value is K2, and K2 is greater than or equal to 1 and less than or equal to 4. For a case where the number of transmission times is 8 (i.e., 8 PRACH transmissions), the target value is K3, and K3 is greater than or equal to 1 and less than or equal to 8.

With the RA method according to the embodiment of the disclosure, the respective target value for each number of transmission times of the multiple PRACH transmissions is configured. This enables the terminal to autonomously determine the target value for the current multiple PRACH transmissions, which improves an accuracy of determining the time period and an effectiveness of dividing RO groups, thereby improving an RA success rate.

In some embodiments, receiving the target value sent by the network device includes:
receiving one target value corresponding to each number of transmission times of the multiple PRACH transmissions sent by the network device via an RRC signaling.

In detail, when the multiple PRACH transmissions corresponding to different numbers of transmission times are performed on the shared RACH resource, the network device sends a single target value corresponding to all the numbers of transmissions times of the PRACH transmissions to the terminal via the RRC signaling. That is, all the numbers of transmission times of the PRACH transmissions correspond to the same target value, which is a positive integer. The terminal receives the target value shared by all the numbers of transmission times of the PRACH transmissions sent by the network device via the RRC signaling.

For example, the base station sends the target value K corresponding to all the numbers of transmission times of the PRACH transmissions to the terminal via the RRC signaling. The terminal receives the K sent by the base station via the RRC signaling, determines a time period consisting of K association pattern periods, and performs the RA process on the RO group within the time period.

For example, the target value is greater than or equal to 1 and less than or equal to the maximum number of transmission times of the multiple PRACH transmissions configured for the current serving cell.

For example, in a case where the base station sends the target value (i.e., K) corresponding to all the numbers of transmission times of the multiple PRACH transmissions via the RRC signaling to the terminal, and where the maximum number of transmission times of the multiple PRACH transmissions configured for the current serving cell is 8, K is greater than or equal to 1 and less than or equal to 8.

With the RA method according to the embodiment of the disclosure, the network device configures a fixed target value for all the numbers of transmission times of the multiple PRACH transmissions, such that the terminal may rapidly identify the time period of the group of RO groups, which reduces the delay in determining the positions for the multiple PRACH transmissions, thereby improving a transmission efficiency and improving an RA success rate.

In some embodiments, the method further includes:
determining the maximum number of association pattern periods within an upper limit of the time period; and
determining a smaller value between the target value and the maximum number of association pattern periods as the number of association pattern periods within the time period.

In detail, after determining the target value based on the preset condition or through configuration of the RRC signaling, the terminal or the network device needs to compare the target value with the maximum number of association pattern periods within the upper limit of the time period, to ensure that the final time period does not exceed the upper limit, i.e., ensuring that the number of association pattern periods within the time period is the smaller value between the target value and the maximum number of association pattern periods.

For example, in a case where the maximum number of association pattern periods within the upper limit of the time period is 2 and where the target value is 4, the number of association pattern periods within the time period is 2.

With the RA method according to the embodiment of the disclosure, the target value is compared with the maximum number of association pattern periods within the upper limit of the time period, and the smaller value is determined as the final number of association pattern periods included in the time period. This further ensures smooth multi-PRACH transmission within each time period.

In some embodiments, the upper limit of the time period includes one or more of the following:
a definite value; or
an integer multiple of an association pattern period.

In detail, the upper limit of the time period may be a definite value, such as 160ms. That is, the time period is up to 160ms.

The upper limit of the time period may be N association pattern periods, where N is an integer, such as 4 association pattern periods.

The RA method according to the above embodiment is further illustrated through the following example below.

### Example 4

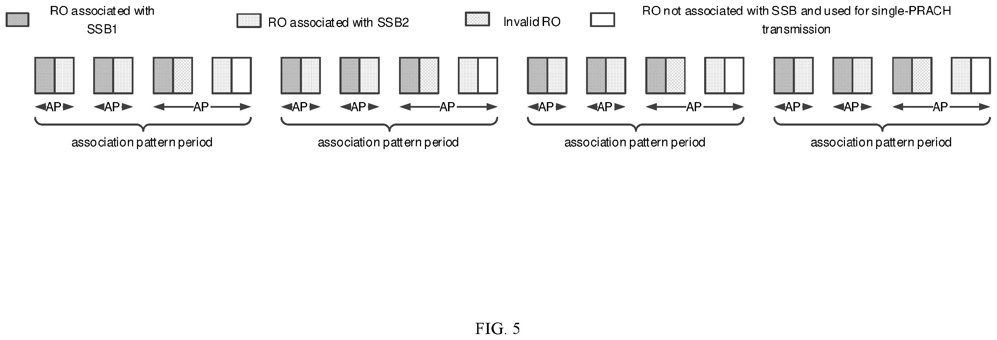

FIG. 5 is a schematic diagram illustrating a division of time periods in an example scenario according to an embodiment of the disclosure. As illustrated in FIG. 5, the number (i.e., K) of association pattern periods corresponding to the time period including a group of RO groups is determined through a predefined rule. The multiple PRACH transmissions adopt the same SSB-to-RO mapping pattern as single-PRACH transmission, with one association period being 20ms and one association pattern period being 80ms.

In the example, it requires that the maximum upper limit of the time period may be a definite value in milliseconds, such as 160ms. Within 160ms, there may be at most two association pattern periods, which is denoted as M = 2. Therefore, when the target value K determined based on Example 1 is 2, the final number of association pattern periods included in the time period is determined as min{M, K}, i.e., min{2, 2}. When the target value K determined based on Example 2 is 4, the final number of association pattern periods included in the time period is min{2, 4}. When the target value K determined based on Example 3 is 3, the final number of association pattern periods included in the time period is min{2, 3}.

Or the upper limit of the time period may be a multiple of a time period of an association pattern period, such as 4 association pattern periods, i.e., M = 4. Therefore, in the case where the target value (i.e., K) determined based on Example 1 is 2, the final number (i.e., K) of association pattern periods included in the time period is determined as min{M, K}, i.e., min{4, 2}. In the case where the target value (i.e., K) determined based on Example 2 is 4, the final number of association pattern periods included in the time period is min{4, 4}. In the case where the target value (i.e., K) determined based on Example 3 is 3, the final number of association pattern periods included in the time period is min{4, 3}.

Example 4 aims to calculate a smaller value between the number (i.e., M) of association pattern periods within the upper limit of the time period and the target value (i.e., K) determined based on each of Examples 1-3. The sequence of the calculation processes of the above is not limited, that is, min{M, K} and min{K, M} are both acceptable.

At the same time when the number (i.e., K) of association periods is determined, the terminal may determine the group of RO groups within K association pattern periods, and performs multiple PRACH transmissions on the RO group associated with its selected SSB index.

### Example 5

Example 5 configures the number (i.e., K) of association pattern periods corresponding to the time period of a group of RO groups via an RRC signaling sent by a network side, and K represents the target value. Example 5 is explained by taking two candidate numbers of transmission times of the multiple PRACH transmissions configured by the network side for a current serving cell as examples, i.e., 2 PRACH transmissions and 4 PRACH transmissions.

The K configured by the network side may be set for each number of levels/transmission times. For example, the network side configures that K is 2 for the case of 2 PRACH transmissions, and configures that K is 3 for the case of 4 -PRACH transmissions. In the embodiment, K is greater than or equal to 1 and less than or equal to the number of transmission times of the multiple PRACH transmissions. That is, for 2 PRACH transmissions, the candidate values of K are 1 and 2. For 4 PRACH transmissions, the candidate values of K are 1, 2, 3 and 4.

The K configured by the network side may be a fixed value, such as 3. In this case, when the terminal selects to perform either 2 PRACH transmissions or 4 PRACH transmissions, the number of association pattern periods corresponding to the time period of the group of RO groups remains as 3. In Example 5, K is greater than or equal to 1 and less than or equal to 4 (which is the maximum number of transmission times of the multiple PRACH transmissions configured for the current serving cell). Thus, the candidate values of K are 1, 2, 3 and 4.

Similar to Example 4, this embodiment may additionally specify the maximum upper limit of the time period. The upper limit of the time period may be a definite value in milliseconds, such as 160ms, or may be a multiple of a time period of an association pattern period, such as 4 association pattern periods. The final value for the number of association pattern periods corresponding to the time period of the group of RO groups is set to the minimum value between the target value configured by the network side and M (which is a number of association pattern periods within the maximum upper limit).

With the RA method according to the embodiment of the disclosure, the target value is determined based on the preset condition or the target value is configured by the network device. The target value is used for determining the number of association pattern periods corresponding to the time period of the group of RO groups, such that the terminal and the network device may rapidly determine the starting position for each multi-PRACH transmission and performs the RA process on the RO group within the time period. This ensures smooth multi-PRACH transmissions and improves an RA success rate.

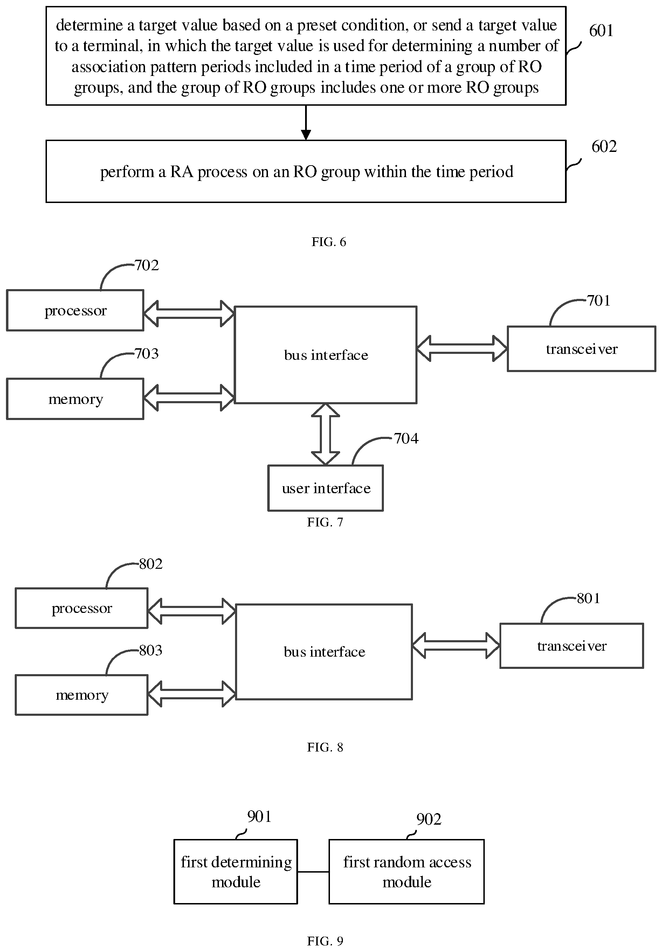

FIG. 6 is another flowchart illustrating an RA method according to an embodiment of the disclosure. As illustrated in FIG. 6, the embodiment of the disclosure provides an RA method, and its execution entity may be a network device, such as a base station. The method includes the following.

At step 601, a target value is determined based on a preset condition, or a target value is sent to a terminal, in which the target value is used for determining the number of association pattern periods included in a time period of a group of RO groups, and the group of RO groups includes one or more RO groups.

At step 602, an RA process is performed on an RO group within the time period.

In some embodiments, sending the target value to the terminal includes:
sending respective target values corresponding to different numbers of transmission times of the multiple PRACH transmissions to the terminal via an RRC signaling, in which a respective target value corresponding to each number of transmission times of the multiple PRACH transmissions is a positive integer.

In some embodiments, the respective target value corresponding to each number of transmission times of the multiple PRACH transmissions is greater than or equal to 1 and less than or equal to the corresponding number of transmission times of the multiple PRACH transmissions.

In some embodiments, sending the target value to the terminal includes:
sending one target value corresponding to each number of transmission times of the multiple PRACH transmissions to the terminal via an RRC signaling, in which the target value corresponding to each number of transmission times of the multiple PRACH transmissions is a positive integer.

In some embodiments, one target value corresponding to all numbers of transmission times of the multiple PRACH transmissions is greater than or equal to 1 and less than or equal to the maximum number of transmission times of the multiple PRACH transmissions configured for a current serving cell.

In some embodiments, the preset condition includes that the target value is the minimum number of association pattern periods required for ensuring that each SSB is associated with at least one RO group within one or more association pattern periods.

In some embodiments, the preset condition includes that K is the minimum number of association pattern periods required for ensuring that the number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a preset fixed value, and the preset fixed value is a non-negative integer.

In some embodiments, the method further includes:
determining the threshold based on a product of the number of valid ROs within one association pattern period and a preset coefficient or based on a product of the number of valid ROs within one RO group and a preset coefficient, in which the threshold is a positive integer.

In some embodiments, the method further includes:

performing a ceiling process or a flooring process on the product of the number of valid ROs within one association pattern period and the preset coefficient or on the product of the number of valid ROs within one RO group and the preset coefficient.
In some embodiments, the number of valid ROs included in one RO group is the maximum number of transmission times of allowed multiple PRACH transmissions on a current RACH resource.

In some embodiments, the method further includes:
determining the maximum number of association pattern periods within an upper limit of the time period; and
determining a smaller value between the target value and the maximum number of association pattern periods as the number of association pattern periods within the time period.

In some embodiments, the upper limit of the time period includes one or more of the following:
a definite value; or
an integer multiple of an association pattern period.

In detail, the RA method according to the embodiment of the disclosure is similar to the way in which the network device or the terminal determines the target value. The target value is obtained through the preset condition or through configuration, and for details, reference may be made to the method embodiments of the above RA method with the terminal as the execution entity. The method may also achieve the same technical effects as the above method, and thus the same contents and beneficial effects in the method embodiments will not be repeated in the embodiment.

FIG. 7 is a schematic structural diagram illustrating a terminal according to an embodiment of the disclosure. As illustrated in FIG. 7, the terminal includes: a memory 703, a transceiver 701, and a processor 702.

The memory 703 is configured to store a computer program. The transceiver 701 is configured to send and receive data under the control of the processor 702. The processor 702 is configured to read the computer program from the memory 703 and perform the following operations:
determining a target value based on a preset condition, or receiving a target value sent by a network device, in which the target value is used for determining the number of association pattern periods within a time period of a group of RO groups, and the group of RO groups includes one or more RO groups; and
performing an RA process on an RO group within the time period.

In FIG. 7, a bus architecture may include any number of interconnected buses and bridges, specifically one or more processors represented by the processor 702 and various circuits of memories represented by the memory 703 are linked together. The bus architecture may also link peripheral devices, voltage regulators, and various other circuits such as power management circuits together, which are well known in the art and will not be further described herein. There is a bus interface that provides an interface. The transceiver 701 may include a plurality of components, such as a transmitter and a receiver, for providing units that may communicate with other devices over transmission mediums. The transmission mediums include wireless channels, wired channels, fiber optic cables, etc. For different UEs, a user interface 704 may also be an interface capable of externally and internally connecting desired devices. The connected devices include, but are not limited to, a keypad, a display, a speaker, a microphone, a joystick, and the like.

The processor 702 is responsible for managing the bus architecture and usual processing, and the memory 703 may store data used by the processor 702 in performing operations.

In some embodiments, the processor 702 may be a central processing unit (CPU), an application specific integrated circuit (ASIC), a field-programmable gate array (FPGA), or a complex programmable logic device (CPLD). The processor may also adopt a multi-core architecture.

The processor is configured to implement any of the methods according to the embodiments of the disclosure by calling the computer program stored in the memory and executing obtained executable instructions. The processor and the memory may be physically separated.

In some embodiments, the preset condition includes that the target value is the minimum number of association pattern periods required for ensuring that each SSB is associated with at least one RO group within one or more association pattern periods.

In some embodiments, the preset condition includes that K is the minimum number of association pattern periods required for ensuring that the number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a non-negative integer and includes any one of the following:
a value configured by the network device; or
a preset fixed value.

In some embodiments, the processor is configured to read the computer program from the memory and perform the following operation:
determining the threshold based on a product of the number of valid ROs within one association pattern period and a preset coefficient or based on a product of the number of valid ROs within one RO group and a preset coefficient, in which the threshold is a positive integer.

In some embodiments, the processor is configured to read the computer program from the memory and perform the following operation:
performing a ceiling process or a flooring process on the product of the number of valid ROs within one association pattern period and the preset coefficient or on the product of the number of valid ROs within one RO group and the preset coefficient.

In some embodiments, the number of valid ROs within the RO group is the maximum number of transmission times of allowed multiple PRACH transmissions on a current RACH resource.

In some embodiments, receiving K sent by the network device includes:
receiving respective target values corresponding to different numbers of transmission times of the multiple PRACH transmissions sent by the network device via an RRC signaling; and
determining the target value corresponding to a number of transmission times of the multiple PRACH transmissions.

In some embodiments, receiving the target value sent by the network device includes:
receiving one target value corresponding to all numbers of transmission times of the multiple PRACH transmissions sent by the network device via an RRC signaling.

In some embodiments, the processor is configured to read the computer program from the memory and perform the following operations:
determining the maximum number of association pattern periods within an upper limit of the time period; and
determining a smaller value between the target value and the maximum number of association pattern periods as the number of association pattern periods within the time period.

In some embodiments, the upper limit of the time period includes one or more of the following:
a definite value; or
an integer multiple of an association pattern period.

It should be noted that the terminal according to the embodiment of the disclosure is capable of performing the steps of the method according to the above method embodiments with the terminal as an execution entity and achieving the same technical effects. Therefore, the same contents and beneficial effects in the method embodiments will not be repeated in the embodiment.

FIG. 8 is a schematic structural diagram illustrating a network device according to an embodiment of the disclosure. As illustrated in FIG. 8, the network device includes: a memory 803, a transceiver 801 and a processor 802.

The memory 803 is configured to store a computer program. The transceiver 801 is configured to send and receive data under the control of the processor 802. The processor 802 is configured to read the computer program from the memory 803 and perform the following operations:
determining a target value based on a preset condition, or sending a target value to a terminal, in which the target value is used for determining the number of association pattern periods within a time period of a group of RO groups, and the group of RO groups includes one or more RO groups; and
performing an RA process on an RO group within the time period.

In FIG. 8, a bus architecture may include any number of interconnected buses and bridges, specifically one or more processors represented by the processor 802 and various circuits of memories represented by the memory 803 are linked together. The bus architecture may also link peripheral devices, voltage regulators, and various other circuits such as power management circuits together, which are well known in the art and will not be further described herein. There is a bus interface that provides an interface. The transceiver 801 may include a plurality of components, such as a transmitter and a receiver, for providing units that may communicate with other devices over transmission mediums. The transmission mediums include wireless channels, wired channels, fiber optic cables, etc. The processor 802 is responsible for managing the bus architecture and usual processing, and the memory 803 may store data used by the processor 802 in performing operations.

The processor 802 may be a CPU, an ASIC, a FPGA, or a CPLD. The processor may also adopt a multi-core architecture.

In some embodiments, sending the target value to the terminal includes:
sending respective target values corresponding to different numbers of transmission times of the multiple PRACH transmissions to the terminal via an RRC signaling, in which a respective target value corresponding to each number of transmission times of the multiple PRACH transmissions is a positive integer.

In some embodiments, the respective target value corresponding to each number of transmission times of the multiple PRACH transmissions is greater than or equal to 1 and less than or equal to the corresponding number of transmission times of the multiple PRACH transmissions.

In some embodiments, sending the target value to the terminal includes:
sending one target value corresponding to all numbers of transmission times of the multiple PRACH transmissions to the terminal via an RRC signaling, in which the target value corresponding to all numbers of transmission times of the multiple PRACH transmissions is a positive integer.

In some embodiments, the target value corresponding to all numbers of transmission times of the multiple PRACH transmissions is greater than or equal to 1 and less than or equal to the maximum number of transmission times of the multiple PRACH transmissions configured for a current serving cell.

In some embodiments, the preset condition includes that the target value is the minimum number of association pattern periods required for ensuring that each SSB is associated with at least one RO group within one or more association pattern periods.

In some embodiments, the preset condition includes that K is the minimum number of association pattern periods required for ensuring that the number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a preset fixed value, and the preset fixed value is a non-negative integer.

In some embodiments, the processor is configured to read the computer program from the memory and perform the following operation:
determining the threshold based on a product of the number of valid ROs within one association pattern period and a preset coefficient or based on a product of the number of valid ROs within one RO group and a preset coefficient, in which the threshold is a positive integer.

In some embodiments, the processor is configured to read the computer program from the memory and perform the following operation:
performing a ceiling process or a flooring process on the product of the number of valid ROs within one association pattern period and the preset coefficient or on the product of the number of valid ROs within one RO group and the preset coefficient.

In some embodiments, the number of valid ROs within one RO group is the maximum number of transmission times of allowed multiple PRACH transmissions on a current RACH resource.

In some embodiments, the processor is configured to read the computer program from the memory and perform the following operations:
determining the maximum number of association pattern periods within an upper limit of the time period; and
determining a smaller value between the target value and the maximum number of association pattern periods as the number of association pattern periods within the time period.

In some embodiments, the upper limit of the time period includes one or more of the following:
a definite value; or
an integer multiple of an association pattern period.

In detail, the network device according to the embodiments of the disclosure may perform all the steps in the method of the method embodiments with the network device as an execution entity, and achieve the same technical effects. Therefore, the same contents and beneficial effects in the method embodiments will not be repeated in the embodiment.

FIG. 9 is a schematic structural diagram illustrating a random access apparatus according to an embodiment of the disclosure. As illustrated in FIG. 9, the embodiment of the disclosure provides a random access apparatus. The apparatus includes: a first determining module 901 and a first random access module 902.

The first determining module 901 is configured to determine a target value based on a preset condition, or receive a target value sent by a network device, in which the target value is used for determining the number of association pattern periods within a time period of a group of RO groups, and the group of RO groups includes one or more RO groups.

The first random access module 902 is configured to perform an RA process on an RO group within the time period.

In some embodiments, the preset condition includes that the target value is the minimum number of association pattern periods required for ensuring that each SSB is associated with at least one RO group within one or more association pattern periods.

In some embodiments, the preset condition includes that the target value is the minimum number of association pattern periods required for ensuring that the number of remaining ROs other than ROs of at least one RO associated with each SSB within one or more association pattern periods is less than or equal to a threshold, and the remaining ROs are valid ROs associated with the SSB but do not belong to any RO group.

In some embodiments, the threshold is a preset fixed value, and the preset fixed value is a non-negative integer.

In some embodiments, the threshold is a non-negative integer and includes any one of the following:
a value configured by the network device; or
a preset fixed value.

In some embodiments, the apparatus further includes:
a third determining module, configured to determine the threshold based on a product of the number of valid ROs within an association pattern period and a preset coefficient or based on a product of the number of valid ROs within an RO group and a preset coefficient, in which the threshold is a positive integer.

In some embodiments, the apparatus further includes:
a first rounding module, configured to perform a ceiling process or a flooring process on the product of the number of valid ROs within one association pattern period and the preset coefficient or on the product of the number of valid ROs within one RO group and the preset coefficient.

In some embodiments, the number of valid ROs included in one RO group is the maximum number of transmission times of allowed multiple PRACH transmissions on a current RACH resource.

In some embodiments, the first determining module includes:
a first receiving unit, configured to receive respective target values corresponding to different numbers of transmission times of the multiple PRACH transmissions sent by the network device via an RRC signaling, and
a first determining unit, configured to determine the target value corresponding to a current number of transmission times of the multiple PRACH transmissions.

In some embodiments, the first determining module further includes:
a second receiving unit, configured to receive one target value corresponding to all numbers of transmission times of the multiple PRACH transmissions sent by the network device via an RRC signaling.

In some embodiments, the apparatus further includes:
a fourth determining module, configured to determine the maximum number of association pattern periods within an upper limit of the time period; and
a fifth determining module, configured to determine a smaller value between the target value and the maximum number of association pattern periods as the number of association pattern periods within the time period.

In some embodiments, the upper limit of the time period includes one or more of the following:
a definite value; or
an integer multiple of an association pattern period.

In detail, the random access apparatus according to the embodiment of the disclosure may perform all the steps in the method of the method embodiments with the terminal as an execution entity, and achieve the same technical effects. Therefore, the same contents and beneficial effects in the method embodiments will not be repeated in the embodiment.

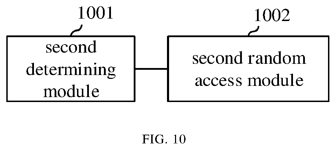

FIG. 10 is a schematic structural diagram illustrating a random access device according to an embodiment of the disclosure. As illustrated in FIG. 10, the embodiment of the disclosure provides a random access device. The device includes: a second determining module 1001 and a second RA module 1002.

The second determining module 1001 is configured to determine a target value based on a preset condition, or send a target value to a terminal, in which the target value is used for determining the number of association pattern periods within a time period of a group of RO groups, and the group of RO groups includes one or more RO groups.

The second RA module 1002 is configured to perform a random access process on an RO group within the time period.

In some embodiments, the second determining module includes:
a first sending unit, configured to send respective target values corresponding to different numbers of transmission times of the multiple PRACH transmissions to the terminal via an RRC signaling, in which a respective target value corresponding to each number of transmission times of the multiple PRACH transmissions is a positive integer.

In some embodiments, the respective target value corresponding to each number of transmission times of the multiple PRACH transmissions is greater than or equal to 1 and less than or equal to the corresponding number of transmission times of the multiple PRACH transmissions.

In some embodiments, the second determining module includes:
a second sending unit, configured to send one target value corresponding to all numbers of transmission times of the multiple PRACH transmissions to the terminal via an RRC signaling, in which the target value corresponding to all numbers of transmission times of the multiple PRACH transmissions is a positive integer.

In some embodiments, the target value corresponding to all numbers of transmission times of the multiple PRACH transmissions is greater than or equal to 1 and less than or equal to the maximum number of transmission times of the multiple PRACH transmissions configured for a current serving cell.

In some embodiments, the preset condition includes that the target value is the minimum number of association pattern periods required for ensuring that each SSB is associated with at least one RO group within one or more association pattern periods.

In some embodiments, the preset condition includes that the target value is the minimum number of association pattern periods required for ensuring that the number of remaining ROs other than ROs of at least one RO group associated with each SSB within one or more association pattern periods is less than or equal to a threshold, and the remaining ROs are valid ROs associated with the SSB but do not belong to any RO group.

In some embodiments, the threshold is a preset fixed value, and the preset fixed value is a non-negative integer.

In some embodiments, the device further includes:
a sixth determining module, configured to determine the threshold based on a product of the number of valid ROs within one association pattern period and a preset coefficient or based on a product of the number of valid ROs within one RO group and a preset coefficient, in which the threshold is a positive integer.

In some embodiments, the device further includes:
a second rounding module, configured to perform a ceiling process or a flooring process on the product of the number of valid ROs within one association pattern period and the preset coefficient or on the product of the number of valid ROs within one RO group and the preset coefficient.

In some embodiments, the number of valid ROs included in one RO group is the maximum number of transmission times of allowed multiple PRACH transmissions on a current RACH resource.

In some embodiments, the device further includes:
a seventh determining module, configured to determine the maximum number of association pattern periods within an upper limit of the time period; and
an eighth determining module, configured to determine a smaller value between the target value and the maximum number of association pattern periods as the number of association pattern periods within the time period.

In some embodiments, the upper limit of the time period includes one or more of the following:
a definite value; or
an integer multiple of association pattern periods.

In detail, the device according to the embodiment of the disclosure is capable of performing the steps of the method according to the above method embodiments with the network device as an execution entity and achieving the same technical effects. Therefore, the same contents and beneficial effects in the method embodiments will not be repeated in the embodiment.

It should be noted that the division of units in the embodiments of the disclosure is exemplary. The division is only a logical division, and there are other types of division methods in practical applications. The functional units in the embodiments of the disclosure may be integrated into a single processing unit or physically separated, or two or more units may be integrated into a single unit. The integrated units described above may be implemented either in hardware or as software functional units.

The integrated units may be stored in a processor-readable storage medium if they are implemented in the form of software functional units and sold or used as independent products. Based on this understanding, the essence of the technical solution of the disclosure, a portion of the technical solution of the disclosure that contributes to related arts, or part or all of the technical solution of the disclosure may be embodied in the form of software product. The computer software product is stored in a storage medium and includes several instructions to cause a computer device (e.g., a personal computer, a server or a network device) or a processor to implement all or part of the steps of the method in the embodiments of the disclosure. The storage medium includes: an USB flash drive, a mobile hard drive, a read-only memory (ROM), an RA memory (RAM), a disk or a compact disc-ROM (CD-ROM), and other mediums that may be used to store program codes.

In some embodiments, a non-transitory readable storage medium is provided. The non-transitory readable storage medium has a computer program stored thereon, and the computer program is used to cause a processor to implement the random access method according to the method embodiments described above.

In detail, the non-transitory readable storage medium according to the embodiment of the disclosure is capable of performing the steps of the method according to the above method embodiments and achieving the same technical effects. Therefore, the same contents and beneficial effects in the method embodiments will not be repeated in the embodiment.

It should be noted that the non-transitory readable storage medium may be any available medium or data storage device accessible by the processor. The medium includes, but is not limited to, a magnetic storage medium (e.g., a floppy disk, a hard disk, a magnetic tape, and a magneto-optical (MO) disk), an optical storage medium (e.g., a compact disc (CD), a digital versatile disc (DVD), a Blu-ray disc (BD) and a high-definition versatile disc (HVD)), and a semiconductor storage medium (e.g., an ROM, an erasable programmable read only memory (EPROM), an electrically EPROM (EEPROM), a NAND FLASH, and a solid-state drive (SSD)).

In some embodiments, a processor-readable storage medium is provided. The processor-readable storage medium has a computer program stored thereon, and the computer program is used to cause a processor to implement the random access method according to the method embodiments described above.

In detail, the processor-readable storage medium according to the embodiment of the disclosure is capable of performing the steps of the method according to the above method embodiments and achieving the same technical effects. Therefore, the same contents and beneficial effects in the method embodiments will not be repeated in the embodiment.

In some embodiments, a computer-readable storage medium is provided. The computer-readable storage medium has a computer program stored thereon, and the computer program is used to cause a computer to implement the random access method according to the method embodiments described above.

In detail, the computer-readable storage medium according to the embodiment of the disclosure is capable of performing the steps of the method according to the above method embodiments and achieving the same technical effects. Therefore, the same contents and beneficial effects in the method embodiments will not be repeated in the embodiment.

In some embodiments, a communication device is provided. The communication device stores a computer program, and the computer program is used to cause the communication device to implement the random access method according to the method embodiments described above.

In detail, the communication device according to the embodiment of the disclosure is capable of performing the steps of the method according to the above method embodiments and achieving the same technical effects. Therefore, the same contents and beneficial effects in the method embodiments will not be repeated in the embodiment.

In some embodiments, a chip product is provided. The chip product has a computer program stored thereon, and the computer program is used to cause the chip product to implement the random access method according to the method embodiments described above.

In detail, the chip product according to the embodiment of the disclosure is capable of performing the steps of the method according to the above method embodiments and achieving the same technical effects. Therefore, the same contents and beneficial effects in the method embodiments will not be repeated in the embodiment.

In addition, it is noted that in the embodiments of the disclosure, terms such as "first" and "second" are used to distinguish similar objects and are not intended to describe a specific sequence or order. It is understood that these terms are interchangeable when appropriate, so that the embodiments of the disclosure may be implemented in sequences other than those illustrated or described herein. Generally, the objects distinguished with the terms "first" and "second" belong to the same type. The terms do not limit the number of objects. For example, there may be one or more "first" objects.

In the embodiments of the disclosure, the term "and/or" is used to describe relationships between associated objects, and it indicates three types of relationships. For example, "A and/or B" represents the following three relationships: A exists alone, A and B both exist, and B exists alone. Generally, the character "/" indicates that associated objects before and after the character "/" is in an "or" relationship.

In the embodiments of the disclosure, "a plurality of" refers to two or more, which is similar for other quantifiers.

The technical solution according to the embodiments of the disclosure is applicable to various systems, in particular to 5G systems and 6G systems. For example, the applicable systems include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, an LTE-advanced (LTE-A) system, an universal mobile telecommunication system (UMTS), a worldwide interoperability for microwave access (WiMAX) system, a 5G new radio (NR) system and a 6G system. Each of these systems includes a terminal and a network device. The system may also include a core network portion, such as an evolved packet system (EPS), a 5G system (5GS), etc.

The terminal involved in the embodiments of the disclosure may be a device that provides voice and/or data connectivity to users, a handheld device with a wireless connectivity function, or other processing devices connected to a wireless modem. The terminal is referred to by different names in different systems. For example, in the 5GS, the terminal may be referred to as UE. The wireless terminal may communicate with one or more core networks (CNs) via a radio access network (RAN). The wireless terminal may be a mobile terminal such as a cell phone (or "cellular" phone), or a computer having a mobile terminal, e.g., a portable, pocket-sized, handheld, computer-built or vehicle-mounted mobile device that is capable of exchanging language and/or data with the RAN. Examples of the wireless terminal include a personal communication service (PCS) phone, a cordless phone, a session initiated protocol (SIP) phone, a wireless local loop (WLL) station and a personal digital assistant (PDA). The wireless terminal may also be referred to as a system, a subscriber unit, a subscriber station, a mobile station, a mobile, a remote station, an access point, a remote terminal, an access terminal, a user terminal, a user agent, or a user device, which is not limited in the embodiments of the disclosure.

The network device involved in the embodiments of the disclosure may be a base station including a plurality of cells providing services to the terminal. Depending on the application scenario, the base station may be referred to as an access point or a device in the access network that communicates with the wireless terminal over one or more disk sectors on a radio interface, or by other names. The network device may exchange received radio frames with internet protocol (IP) packets, acting as a router between the wireless terminal and a remaining portion of the access network. The remaining portion of the access network includes an IP communication network. The network device may also be used for management coordination of attributes of the radio interface. For example, the network device involved in the embodiments of the disclosure may be a base transceiver station (BTS) in the GSM system or the CDMA system, a NodeB (NB) in the WCDMA system, an evolutional NB (eNB) in the LTE system, a 5G gNB in a next generation system, a home evolved NB (HeNB), a relay node, a femto, a pico, etc., which is not limited in the embodiments of the disclosure. In some network structures, the network device may include a centralized unit (CU) and a plurality of distributed units (DUs), and the CU and the DUs are geographically separated.

In the disclosure, "determining B based on A" means that A needs to be considered when determining B, and is not limited to "determining B solely based on A". For example, it may include: "determining B based on A and C," "determining B based on A, C and E", "determining C based on A, then further determining B based on C", and the like. In addition, it may also indicates that A is used as a condition for determining B, for example, "when A satisfies a first condition, using a first method to determine B", "when A satisfies a second condition, determining B", or "when A satisfies a third condition, determining B based on a first parameter". Certainly, it may further indicates that A is used as a condition for determining a factor of B, such as "when A satisfies the first condition, using the first method to determine C, and further determining B based on C."

The network device and the terminal each uses one or more antennas for multi-input multi-output (MIMO) transmission. MIMO transmission is categorized as single user-MIMO (SU-MIMO) and multiple user-MIMO (MU-MIMO). Depending on the form and quantity of combinations of antennas, MIMO transmission is divided into 2D-MIMO, 3D-MIMO, FD-MIMO and massive-MIMO. It may also involve diversity transmission, pre-coding transmission and beam-forming transmission.

Those skilled in the art understand that the embodiments of the disclosure may be provided as a method, a system or a computer program product. Therefore, the disclosure may be implemented in the form of all hardware embodiments, all software embodiments, or a combination of hardware embodiments and software embodiments. Moreover, the disclosure may be implemented in the form of a computer program product embodied on one or more computer-usable storage mediums (including but not limited to a magnetic disk memory and an optical memory) containing computer usable program codes.

The disclosure is described with reference to flowcharts and/or block diagrams of the method, the apparatus (system) and the computer program product according to the embodiments of the disclosure. It should be understood that each process and/or block in the flowcharts and/or block diagrams, or any combination of processes and/or blocks in the flowcharts and/or block diagrams, can be implemented by computer-executable instructions. These computer-executable instructions are provided to a processor of a general-purpose computer, a dedicated computer, an embedded processor or a programmable data processing device to produce a machine, so that the instructions executed by the processor of the computer or the programmable data processing device can produce an apparatus and/or a device for implementing functions specified in one or more processes in the flowcharts and/or one or more blocks in the block diagrams.

These processor-executable instructions may also be stored in a processor-readable memory that can direct a computer or other programmable data processing devices to operate in a specific way, so that the instructions stored in the processor-readable memory can produce an article containing command units used for implementing the functions specified in one or more processes in the flowcharts and/or one or more blocks in the block diagrams.

These processor-executable instructions may also be loaded onto a computer or other programmable data processing devices, so that a series of operation steps can be executed on the computer or other programmable devices to produce processes implementable by the computer. The instructions executed on the computer or the programmable devices provide steps for implementing the functions specified in one or more processes in the flowcharts and/or one or more blocks in the block diagrams.

Obviously, various changes and modifications made by those skilled in the field to the disclosure are within the spirit and scope of the disclosure. Since these changes and modifications to the disclosure fall within the scope of the claims of the disclosure and their equivalents, the disclosure is intended to include these changes and modifications.

## Claims

1. A random access method, performed by a terminal, comprising:
determining a target value based on a preset condition, or receiving a target value sent by a network device, wherein the target value is used for determining a number of association pattern periods within a time period of a group of random access channel occasion (RO) groups, and the group of RO groups comprises one or more RO groups; and
performing a random access process on an RO group within the time period.

2. The method of claim 1, wherein the preset condition comprises that the target value is a minimum number of association pattern periods required for ensuring that each synchronization signal block (SSB) is associated with at least one RO group within one or more association pattern periods.

3. The method of claim 1, wherein the preset condition comprises that the target value is a minimum number of association pattern periods required for ensuring that a number of remaining ROs other than ROs of at least one RO group associated with each synchronization signal block (SSB) within one or more association pattern periods is less than or equal to a threshold, and the remaining ROs are valid ROs associated with the SSB but do not belong to any RO group.

4. The method of claim 3, wherein the threshold is a non-negative integer and comprises any one of:
a value configured by the network device; or
a preset fixed value.

5. The method of claim 3, further comprising:
determining the threshold based on a product of a number of valid ROs within one association pattern period and a preset coefficient or based on a product of a number of valid ROs within one RO group and a preset coefficient, wherein the threshold is a positive integer.

6. The method of claim 5, further comprising:
performing a ceiling process or a flooring process on the product of the number of valid ROs within one association pattern period and the preset coefficient or on the product of the number of valid ROs within one RO group and the preset coefficient.

7. The method of any one of claims 2 to 5, wherein the number of valid ROs within one RO group is a maximum number of transmission times of allowed multiple physical random access channel (PRACH) transmissions on a current random access channel (RACH) resource.

8. The method of claim 1, wherein receiving the target value sent by the network device comprises:
receiving respective target values corresponding to different numbers of transmission times of multiple physical random access channel (PRACH) transmissions sent by the network device via a radio resource control (RRC) signaling; and
determining the target value corresponding to a current number of transmission times of the multiple PRACH transmissions.

9. The method of claim 1, wherein receiving the target value sent by the network device comprises:
receiving one target value corresponding to each number of transmission times of multiple physical random access channel (PRACH) transmissions sent by the network device via a radio resource control (RRC) signaling.

10. The method of claim 1, further comprising:
determining a maximum number of association pattern periods within an upper limit of the time period; and
determining a smaller value between the target value and the maximum number of association pattern periods as the number of association pattern periods within the time period.

11. The method of claim 10, wherein the upper limit of the time period comprises one or more of:
a definite value; or
an integer multiple of an association pattern period.

12. A random access method, performed by a network device, comprising:
determining a target value based on a preset condition, or sending a target value to a terminal, wherein the target value is used for determining a number of association pattern periods within a time period of a group of random access channel occasion (RO) groups, and the group of RO groups comprises one or more RO groups; and
performing a random access process on an RO group within the time period.

13. The method of claim 12, wherein sending the target value to the terminal comprises:
sending respective target values corresponding to different numbers of transmission times of multiple physical random access channel (PRACH) transmissions to the terminal via a radio resource control (RRC) signaling, wherein a respective target value corresponding to each number of transmission times of the multiple PRACH transmissions is a positive integer.

14. The method of claim 13, wherein a respective target value corresponding to each number of transmission times of the multiple PRACH transmissions is greater than or equal to 1 and less than or equal to a corresponding number of transmission times of the multiple PRACH transmissions.

15. The method of claim 12, wherein sending the target value to the terminal comprises:
sending one target value corresponding to each number of transmission times of multiple physical random access channel (PRACH) transmissions to the terminal via a radio resource control (RRC) signaling, wherein the target value corresponding to each number of transmission times of the multiple PRACH transmissions is a positive integer.

16. The method of claim 15, wherein the target value corresponding to each number of transmission times of the multiple PRACH transmissions is greater than or equal to 1 and less than or equal to a maximum number of transmission times of the multiple PRACH transmissions configured for a current serving cell.

17. The method of claim 12, wherein the preset condition comprises that the target value is a minimum number of association pattern periods required for ensuring that each synchronization signal block (SSB) is associated with at least one RO group within one or more association pattern periods.

18. The method of claim 12, wherein the preset condition comprises that the target value is a minimum number of association pattern periods required for ensuring that a number of remaining ROs other than ROs of at least one RO group associated with each synchronization signal block (SSB) within one or more association pattern periods is less than or equal to a threshold, and the remaining ROs are valid ROs associated with the SSB but do not belong to any RO group.

19. The method of claim 18, wherein the threshold is a preset fixed value, and the preset fixed value is a non-negative integer.

20. The method of claim 18, further comprising:
determining the threshold based on a product of a number of valid ROs within one association pattern period and a preset coefficient or based on a product of a number of valid ROs within one RO group and a preset coefficient, wherein the threshold is a positive integer.

21. The method of claim 20, further comprising:
performing a ceiling process or a flooring process on the product of the number of valid ROs within one association pattern period and the preset coefficient or on the product of the number of valid ROs within one RO group and the preset coefficient.

22. The method of any one of claims 17 to 20, wherein the number of valid ROs within one RO group is a maximum number of transmission times of allowed multiple physical random access channel (PRACH) transmissions on a current random access channel (RACH) resource.

23. The method of claim 12, further comprising:
determining a maximum number of association pattern periods within an upper limit of the time period; and
determining a smaller value between the target value and the maximum number of association pattern periods as the number of association pattern periods within the time period.

24. The method of claim 23, wherein the upper limit of the time period comprises one or more of:
a definite value; or
an integer multiple of an association pattern period.

25. A terminal, comprising a memory, a transceiver, and a processor;
wherein the memory is configured to store a computer program, the transceiver is configured to send and receive data under a control of the processor, and the processor is configured to read the computer program from the memory and perform following operations:
determining a target value based on a preset condition, or receiving a target value sent by a network device, wherein the target value is used for determining a number of association pattern periods within a time period of a group of random access channel occasion (RO) groups, and the group of RO groups comprises one or more RO groups; and
performing a random access process on an RO group within the time period.

26. The terminal of claim 25, wherein the preset condition comprises that the target value is a minimum number of association pattern periods required for ensuring that each synchronization signal block (SSB) is associated with at least one RO group within one or more association pattern periods.

27. The terminal of claim 25, wherein the preset condition comprises that the target value is a minimum number of association pattern periods required for ensuring that a number of remaining ROs other than ROs of at least one RO group associated with each synchronization signal block (SSB) within one or more association pattern periods is less than or equal to a threshold, and the remaining ROs are valid ROs associated with the SSB but do not belong to any RO group.

28. The terminal of claim 27, wherein the threshold is a non-negative integer and comprises any one of:
a value configured by the network device; or
a preset fixed value.

29. The terminal of claim 27, wherein the processor is configured to read the computer program from the memory and perform a following operation:
determining the threshold based on a product of a number of valid ROs within one association pattern period and a preset coefficient or based on a product of a number of valid ROs within one RO group and a preset coefficient, wherein the threshold is a positive integer.

30. The terminal of claim 29, wherein the processor is configured to read the computer program from the memory and perform a following operation:
performing a ceiling process or a flooring process on the product of the number of valid ROs within one association pattern period and the preset coefficient or on the product of the number of valid ROs within one RO group and the preset coefficient.

31. The terminal of any one of claims 26 to 29, wherein the number of valid ROs within one RO group is a maximum number of transmission times of allowed multiple physical random access channel (PRACH) transmissions on a current random access channel (RACH) resource.

32. The terminal of claim 25, wherein receiving the target value sent by the network device comprises:
receiving respective target values corresponding to different numbers of transmission times of multiple physical random access channel (PRACH) transmissions sent by the network device via a radio resource control (RRC) signaling; and
determining the target value corresponding to a current number of transmission times of the multiple PRACH transmissions.

33. The terminal of claim 25, wherein receiving the target value sent by the network device comprises:
receiving one target value corresponding to each number of transmission times of multiple physical random access channel (PRACH) transmissions sent by the network device via a radio resource control (RRC) signaling.

34. The terminal of claim 25, wherein the processor is configured to read the computer program from the memory and perform a following operation:
determining a maximum number of association pattern periods within an upper limit of the time period; and
determining a smaller value between the target value and the maximum number of association pattern periods as the number of association pattern periods within the time period.

35. The terminal of claim 34, wherein the upper limit of the time period comprises one or more of:
a definite value; or
an integer multiple of an association pattern period.

36. A network device, comprising a memory, a transceiver, and a processor;
wherein the memory is configured to store a computer program, the transceiver is configured to send and receive data under a control of the processor, and the processor is configured to read the computer program from the memory and to perform following operations:
determining a target value based on a preset condition, or sending a target value to a terminal, wherein the target value is used for determining a number of association pattern periods within a time period of a group of random access channel occasion (RO) groups, and the group of RO groups comprises one or more RO groups; and
performing a random access process on an RO group within the time period.

37. The network device of claim 36, wherein sending the target value to the terminal comprises:
sending respective target values corresponding to different numbers of transmission times of multiple physical random access channel (PRACH) transmissions to the terminal via a radio resource control (RRC) signaling, wherein a respective target value corresponding to each number of transmission times of the multiple PRACH transmissions is a positive integer.

38. The network device of claim 37, wherein the respective target value corresponding to each number of transmission times of the multiple PRACH transmissions is greater than or equal to 1 and less than or equal to a corresponding number of transmission times of the multiple PRACH transmissions.

39. The network device of claim 36, wherein sending the target value to the terminal comprises:
sending one target value corresponding to each number of transmission times of multiple physical random access channel (PRACH) transmissions to the terminal via a radio resource control (RRC) signaling, wherein the target value corresponding to each number of transmission times of the multiple PRACH transmissions is a positive integer.

40. The network device of claim 39, wherein the target value corresponding to each number of transmission times of the multiple PRACH transmissions is greater than or equal to 1 and less than or equal to a maximum number of transmission times of the multiple PRACH transmissions configured for a current serving cell.

41. The network device of claim 36, wherein the preset condition comprises that the target value is a minimum number of association pattern periods required for ensuring that each synchronization signal block (SSB) is associated with at least one RO group within one or more association pattern periods.

42. The network device of claim 36, wherein the preset condition comprises that the target value is a minimum number of association pattern periods required for ensuring that a number of remaining ROs other than ROs of at least one RO group associated with each synchronization signal block (SSB) within one or more association pattern periods is less than or equal to a threshold, and the remaining ROs are valid ROs associated with the SSB but do not belong to any RO group.

43. The network device of claim 42, wherein the threshold is a preset fixed value, and the preset fixed value is a non-negative integer.

44. The network device of claim 42, wherein the processor is configured to read the computer program from the memory and perform a following operation:
determining the threshold based on a product of a number of valid ROs within one association pattern period and a preset coefficient or based on a product of a number of valid ROs within one RO group and a preset coefficient, wherein the threshold is a positive integer.

45. The network device of claim 44, wherein the processor is configured to read the computer program from the memory and perform a following operation:
performing a ceiling process or a flooring process on the product of the number of valid ROs within one association pattern period and the preset coefficient or on the product of the number of valid ROs within one RO group and the preset coefficient.

46. The network device of any one of claims 41 to 44, wherein the number of valid ROs within one RO group is a maximum number of transmission times of allowed multiple physical random access channel (PRACH) transmissions on a current random access channel (RACH) resource.

47. The network device of claim 36, wherein the processor is configured to read the computer program from the memory and perform following operations:
determining a maximum number of association pattern periods within an upper limit of the time period; and
determining a smaller value between the target value and the maximum number of association pattern periods as the number of association pattern periods within the time period.

48. The network device of claim 47, wherein the upper limit of the time period comprises one or more of:
a definite value; or
an integer multiple of an association pattern period.

49. A random access apparatus, comprising:
a first determining module, configured to determine a target value based on a preset condition, or receive a target value sent by a network device, wherein the target value is used for determining a number of association pattern periods within a time period of a group of random access channel occasion (RO) groups, and the group of RO groups comprises one or more RO groups; and
a first random access module, configured to perform a random access process on an RO group within the time period.

50. The apparatus of claim 49, wherein the preset condition comprises that the target value is a minimum number of association pattern periods required for ensuring that each synchronization signal block (SSB) is associated with at least one RO group within one or more association pattern periods.

51. The apparatus of claim 49, wherein the preset condition comprises that the target value is a minimum number of association pattern periods required for ensuring that a number of remaining ROs other than ROs of at least one RO associated with each synchronization signal block (SSB) within one or more association pattern periods is less than or equal to a threshold, and the remaining ROs are valid ROs associated with the SSB but do not belong to any RO group.

52. The apparatus of claim 51, wherein the threshold is a non-negative integer and comprises any one of:
a value configured by the network device; or
a preset fixed value.

53. The apparatus of claim 51, further comprising:
a third determining module, configured to determine the threshold based on a product of a number of valid ROs within one association pattern period and a preset coefficient or based on a product of a number of valid ROs within one RO group and a preset coefficient, wherein the threshold is a positive integer.

54. The apparatus of claim 53, further comprising: a first rounding module, configured to perform a ceiling process or a flooring process on the product of the number of valid ROs within one association pattern period and the preset coefficient or on the product of the number of valid ROs within one RO group and the preset coefficient.

55. The apparatus of any one of claims 50 to 53, wherein the number of valid ROs within one RO group is a maximum number of transmission times of allowed multiple physical random access channel (PRACH) transmissions on a current random access channel (RACH) resource.

56. The apparatus of claim 49, wherein the first determining module comprises: a first receiving unit, configured to receive respective target values corresponding to different numbers of transmission times of multiple physical random access channel (PRACH) transmissions sent by the network device via a radio resource control (RRC) signaling, and
a first determining unit, configured to determine the target value corresponding to a current number of transmission times of the multiple PRACH transmissions.

57. The apparatus of claim 49, wherein the first determining module further comprises a second receiving unit, and the second receiving unit is configured to receive one target value corresponding to each number of transmission times of multiple physical random access channel (PRACH) transmissions sent by the network device via a radio resource control (RRC) signaling.

58. The apparatus of claim 49, further comprising: a fourth determining module, configured to determine a maximum number of association pattern periods within an upper limit of the time period; and
a fifth determining module, configured to determine a smaller value between the target value and the maximum number of association pattern periods as the number of association pattern periods within the time period.

59. The apparatus of claim 58, wherein the upper limit of the time period comprises one or more of:
a definite value; or
an integer multiple of an association pattern period.

60. A random access device, comprising:
a second determining module, configured to determine a target value based on a preset condition, or send a target value to a terminal, wherein the target value is used for determining a number of association pattern periods within a time period of a group of random access channel occasion (RO) groups, and the group of RO groups comprises one or more RO groups; and
a second random access module, configured to perform a random access process on an RO group within the time period.

61. The device of claim 60, wherein the second determining module comprises a first sending unit, configured to send respective target values corresponding to different numbers of transmission times of multiple physical random access channel (PRACH) transmissions to the terminal via a radio resource control (RRC) signaling, wherein a respective target value corresponding to each number of transmission times of the multiple PRACH transmissions is a positive integer.

62. The device of claim 61, wherein a respective target value corresponding to each number of transmission times of the multiple PRACH transmissions is greater than or equal to 1 and less than or equal to a corresponding number of transmission times of the multiple PRACH transmissions.

63. The device of claim 60, wherein the second determining module comprises a second sending unit, configured to send one target value corresponding to each number of transmission times of multiple physical random access channel (PRACH) transmissions to the terminal via a radio resource control (RRC) signaling, wherein the target value corresponding to each number of transmission times of the multiple PRACH transmissions is a positive integer.

64. The device of claim 63, wherein the target value corresponding to each number of transmission times of the multiple PRACH transmissions is greater than or equal to 1 and less than or equal to a maximum number of transmission times of the multiple PRACH transmissions configured for a current serving cell.

65. The device of claim 60, wherein the preset condition comprises that the target value is a minimum number of association pattern periods required for ensuring that each synchronization signal block (SSB) is associated with at least one RO group within one or more association pattern periods.

66. The device of claim 60, wherein the preset condition comprises that the target value is a minimum number of association pattern periods required for ensuring that a number of remaining ROs other than ROs of at least one RO group associated with each synchronization signal block (SSB) within one or more association pattern periods is less than or equal to a threshold, and the remaining ROs are valid ROs associated with the SSB but do not belong to any RO group.

67. The device of claim 66, wherein the threshold is a preset fixed value, and the preset fixed value is a non-negative integer.

68. The device of claim 66, further comprising: a sixth determining module, configured to determine the threshold based on a product of a number of valid ROs within one association pattern period and a preset coefficient or based on a product of a number of valid ROs within one RO group and a preset coefficient, wherein the threshold is a positive integer.

69. The device of claim 68, further comprising: a second rounding module, configured to perform a ceiling process or a flooring process on the product of the number of valid ROs within one association pattern period and the preset coefficient or on the product of the number of valid ROs within one RO group and the preset coefficient.

70. The device of any one of claims 65 to 68, wherein the number of valid ROs within one RO group is a maximum number of transmission times of allowed multiple physical random access channel (PRACH) transmissions on a current random access channel (RACH) resource.

71. The device of claim 60, further comprising: a seventh determining module, configured to determine a maximum number of association pattern periods within an upper limit of the time period; and
an eighth determining module, configured to determine a smaller value between the target value and the maximum number of association pattern periods as the number of association pattern periods within the time period.

72. The device of claim 71, wherein the upper limit of the time period comprises one or more of:
a definite value; or
an integer multiple of an association pattern period.

73. A non-transitory readable storage medium, wherein the non-transitory readable storage medium has a computer program stored thereon, and the computer program is used for causing a processor to implement the random access method of any one of claims 1 to 11.

74. A non-transitory readable storage medium, wherein the non-transitory readable storage medium has a computer program stored thereon, and the computer program is used for causing a processor to implement the random access method of any one of claims 12 to 24.
